# EUROPÄISCHE PATENTSCHRIFT

(11) **EP 2 905 106 B1**
(45) Veröffentlichungstag und Bekanntmachung des Hinweises auf die Patenterteilung: **10.04.2019**
(21) Anmeldenummer: 15153457.5
(22) Anmeldetag: 02.02.2015
(51) Int. Cl.: B23Q 1/00, B25B 13/48, B25B 27/14

(54) **Nullpunkt Positionier- und Spannsystem**
Neutral point positioning and tensioning system
Système de serrage et de positionnement au point zéro

(30) Priorität: 05.02.2014 DE 102014001473
(43) Veröffentlichungstag der Anmeldung: 12.08.2015
(73) Patentinhaber: Liebherr-Werk Biberach GmbH, 88400 Biberach an der Riß (DE)
(72) Erfinder: Ruess, Hardy, 88454 Hochdorf (DE)
(74) Vertreter: Herrmann, Uwe

(56) Entgegenhaltungen:
- EP-A1- 1 402 995
- DE-A1- 3 807 914
- DE-A1-102005 043 751
- US-A1- 2002 000 028

## Beschreibung

Die folgende Erfindung betrifft ein Nullpunkt Positionier- und Spannsystem zum präzisen und schnellen Positionieren großer Werkstücke an Bearbeitungsmaschinen, wobei die Notwendigkeit eines Ausrichtens der Rohteile möglichst minimiert ist.

Bei der automatisierten Bearbeitung von Stahl- bzw. Metallbaugruppen ist es häufig notwendig, die zu bearbeitenden Teile aufwendig auszurichten und einzuspannen, damit eine entsprechende gewünschte Präzision bei der Bearbeitung gewährleistet werden kann. Dabei ist es bekannt, dass die Lage der zu bearbeitenden Teile bzw. der daran gegebenenfalls vorhandenen Bohrungen und/oder Flächen überprüft und gegebenenfalls korrigiert werden muss, sodass eine Bearbeitung innerhalb der zulässigen Toleranzen erfolgen kann.

Als Problem erweist sich dabei, dass das Überprüfen und Einrichten des zu bearbeitenden Teils sehr langwierig sein kann und gegebenenfalls eine längere Zeitdauer beanspruchen kann als die eigentliche Bearbeitungszeit des zu bearbeitenden Teils.

Die DE 38 07 914 A1 offenbart ein Positionier- und Spannsystem zum Positionieren und Verspannen eines Werkstücks an einer Bearbeitungsmaschine, die sämtliche Merkmale des Oberbegriffs des Anspruchs 1 aufweist.

Weitere aus dem Stand der Technik bekannte Systeme finden sich in der EP 1 402 995 A1 sowie in der DE 10 2005 043751 A1, deren Offenbarungen jeweils ein Positionier- und Spannsystem mit den oben beschriebenen Nachteilen zeigt.

Aufgabe der vorliegenden Erfindung ist es daher, ein Nullpunkt Positionier- und Spannsystem bereitzustellen, das eine verbesserte Positionierbarkeit von zu bearbeitenden Teilen ermöglicht.

Diese Aufgabe wird erfindungsgemäß durch ein Nullpunkt Positionier- und Spannsystem mit Merkmalen des Anspruchs 1 gelöst.

Das Zusammenspiel von Positionierungsbolzen und Positionierungstasche ermöglicht dabei eine besonders einfache und dabei präzise Ausrichtung bzw. Positionierung zwischen dem mit dem Positionierungsbolzen verbundenen Werkstück auf der einen Seite und der mit der Positionierungstasche verbundenen Haltevorrichtung auf der anderen Seite. Entscheidend ist, dass eine Bearbeitungsmaschine relativ zur Haltevorrichtung genau positionierbar ist bzw. positioniert ist. Dies kann dadurch gewährleistet sein, dass beispielsweise sowohl Bearbeitungsmaschine als auch Haltevorrichtung auf demselben Maschinentisch angeordnet sind. Es ist selbstverständlich, dass zum Erreichen der gewünschten präzisen Ausrichtung des Werkstückes an der Haltevorrichtung, die an dem Werkstück vorgesehenen Positionierungsbolzen ebenfalls mit einer entsprechenden Präzision am Werkstück angebracht bzw. montiert werden müssen. Hierfür ist der Einsatz einer entsprechenden Befestigungsmaschine bzw. Positioniervorrichtung wie z.B. einer Montagelehre denkbar. Diese Positioniervorrichtung ist dazu ausgelegt, die Positionierungsbolzen an vordefinierten Punkten eines Werkstücks zu positionieren, so dass die Positionierungsbolzen dann entsprechend präzise mit dem Werkstück verbunden z.B. verschweißt werden können.

In einem bevorzugten Ausführungsbeispiel ist denkbar, dass das Spann- und Lösewerkzeug zum Spannen und Lösen lösbar verspannbarer Werkstücke je wenigstens einen Hebel, einen Exzenterbolzen und eine Ausziehklinke umfasst, und/oder dass der Exzenterbolzen einen zylindrischen Lagerabschnitt zum drehbaren Lagern des Spann- und Lösewerkzeugs in einer zylindrischen Aufnahme und einen zum Lagerabschnitt exzentrischen, zylindrischen Spannabschnitt umfasst, und/oder dass der Hebel und die Ausziehklinke am Spannabschnitt vorgesehen sind.

Ein derartiges Spann- und Lösewerkzeug ermöglicht es vorteilhafterweise, zum einen über den Exzenterbolzen so auf ein einzuspannendes Werkstück einzuwirken, dass dieses in einer Einspanngeometrie eingespannt wird und zum anderen mittels der Ausziehklinke desselben Spann- und Lösewerkzeugs bei Bedarf das in der Einspanngeometrie eingespannte Werkstück von der Einspanngeometrie zu lösen. Die zum Lagerabschnitt exzentrische Positionierung des zylindrischen Spannabschnitts und des damit verbundenen Hebels ermöglicht es dabei, eine Kraft auf den Hebel des Spann- und Lösewerkzeugs so einwirken zu lassen, dass diese über einen Hebeleffekt verstärkt auf den Exzenterbolzen und weiter auf ein einzuspannendes Werkstück wirken kann.

In einem weiteren bevorzugten Ausführungsbeispiel ist dabei denkbar, dass der Hebel des Spann- und Lösewerkzeugs als Inbusschlüssel ausgebildet ist.

Denkbar sind dabei selbstverständlich alle als Hebel in Frage kommenden Geometrien, die dazu geeignet sein müssen, die Hebelfunktion des Spann- und Lösewerkzeugs erfüllen zu können.

In einem weiteren bevorzugten Ausführungsbeispiel ist denkbar, dass der Spannabschnitt des Spann- und Lösewerkzeugs eine Nut umfasst, wobei besonders bevorzugt ist, dass die Nut als Rundnut ausgebildet ist.

Mittels der Nut bzw. Rundnut kann vorteilhafterweise ein besonders stabiler Kontakt zwischen dem Spann- und Lösewerkzeug und einem einzuspannenden Werkstück einfach hergestellt werden.

In einem besonders bevorzugten Ausführungsbeispiel ist denkbar, dass eine Spannvorrichtung des Positionier- und Spannsystems das Spann- und Lösewerkzeug, die Positionierungstasche, den Positionierungsbolzen und ein Positionierungsblech umfasst.

Alle Bestandteile des Positionier- und Spannsystems, die beim Verspannen des Werkstücks wechselwirken, bilden somit die Spannvorrichtung. Das Positionierungsblech begrenzt dabei den Positionierungsbolzen in wenigstens eine Richtung, in dem es zwischen Positionierungstasche und Werkstück eingespannt ist.

Gemäß der Erfindung weist die Positionierungstasche ein Einschubfach zur Aufnahme des Positionierungsbolzens auf.

Der Positionierungsbolzen und ein gegebenenfalls damit in Verbindung stehendes, zu bearbeitendes Werkstück können besonders einfach und besonders präzise in das entsprechend gestaltete Einschubfach eingeführt werden. Hierfür muss zum Beispiel lediglich das mittels eines Portalkrans transportierte Werkstück mit Positionierungsbolzen in einer vertikalen Richtung von oben nach unten und/oder in einer horizontalen Richtung in das Einschubfach der Positionierungstaschen eingelegt werden. Das Werkstück bleibt dann aufgrund seines Eigengewichts mit dem Einschubfach beziehungsweise mit der Positionierungstasche verbunden.

Zudem ist nach der Erfindung gefordert, dass das Einschubfach einen U-förmigen Positionierungskragen zum Einschieben und Positionieren des Positionierungsbolzensumfasst, wobei der U-förmige Positionierungskragen zu seinen Enden hin verbreitert ist.

In einem besonders bevorzugten Ausführungsbeispiel ist denkbar, dass das Einschubfach, einen U-förmigen Positionierungsrand zum Einschieben und Positionieren des Positionierungsblechs umfasst.

Ein derart ausgestaltetes Einschubfach erlaubt es vorteilhafterweise sowohl Positionierungsblech als auch Positionierungsbolzen schnell und präzise relativ zum Einschubfach und damit zur Positionierungstasche und zur Bearbeitungsmaschine zu positionieren. Weiterhin erlaubt es der nach oben zu seinen Enden hin verbreiterte U-förmige Positionierungskragen den Positionierungsbolzen einfach in den Positionierungskragen einzuführen, da durch die endseitige Verbreiterung eine Selbstpositionierung des Positionierungsbolzens beim Einfahren des Positionierungsbolzens von oben nach unten in den Positionierungskragen möglich ist.

In einem weiteren bevorzugten Ausführungsbeispiel ist denkbar, dass die Positionierungstasche einen Flanschabschnitt mit einer Mehrzahl von Durchführungen zum Verbinden der Positionierungstasche mit einer Haltevorrichtung, und/oder wenigstens ein Verbindungselement zum Verbinden des Positionierungsblechs mit der Positionierungstasche und/oder wenigstens eine Positionierungsausnehmung zum Positionieren des Positionierungsblechs umfasst.

Vorteilhafterweise kann durch den Flanschabschnitt der Positionierungstasche die Positionierungstasche und damit gegebenenfalls die gesamte Spannvorrichtung fest mit einer Haltevorrichtung verbunden werden, sodass eine Bearbeitung eines in der Spannvorrichtung eingespannten Werkstücks ohne störende Eigenbewegungen des Werkstücks möglich ist. Mittels des Verbindungselements der Positionierungstasche wird vorteilhafterweise gewährleistet, dass das Positionierungsblech nicht ohne weiteres relativ zur Positionierungstasche verschoben werden kann wodurch das in der Spannvorrichtung gelagerte Werkstück dauerhaft in derselben Position präzise lagerbar ist. Diese präzise Lagerung wird vorteilhafterweise durch die wenigstens eine Positionierungsausnehmung erleichtert, die zum Positionieren des Positionierungsblechs relativ zur Positionierungstasche zusätzlich bereitstellbar ist.

In einem weiteren bevorzugten Ausführungsbeispiel ist denkbar, dass das Positionierungsblech eine Durchführung zum Verbinden des Positionierungsblechs mit der Positionierungstasche, und/oder eine zylindrische Aufnahme zum Lagern des zylindrischen Lagerabschnitts des Positionierungsbolzens des Spann- und Lösewerkzeugs, und/oder eine U-förmige Positionierungskante zum Positionieren des Positionierungsblechs im Einschubfach der Positionierungstasche, und/oder wenigstens einen Positionierungszapfen zum Positionieren des Positionierungsblechs in der Positionierungstasche umfasst.

Mit der genannten Durchführung kann vorteilhafterweise zum Beispiel eine übliche Schraubverbindung zwischen Positionierungsblech und Positionierungstasche hergestellt werden. Die zylindrische Aufnahme stellt eine vorteilhaft einfache Möglichkeit zum Koppeln des Spann- und Lösewerkzeugs mit dem Positionierungsblech dar. Weiterhin vorteilhaft kann mittels des wenigstens einen Positionierungszapfens die relative Position von Positionierungstasche und Positionierungsblech festgestellt werden. Es sind dabei genauso Ausführungsformen denkbar, bei denen das Positionierungsblech und die Positionierungstasche als einstückig ausgeführtes Bauteil ausgeführt sind, sodass eine nachträgliche Positionierung von Positionierungsblech und Positionierungstasche relativ zueinander nicht notwendig ist.

In einem weiteren bevorzugten Ausführungsbeispiel ist denkbar, dass der Positionierungsbolzen einen Anbindungsabschnitt zum Anbinden des Positionierungsbolzens an einem Werkstück, und/oder einen Rundnutabschnitt zum Aufnehmen der Ausziehklinke des Spann- und Lösewerkzeugs zum Lösen des Positionierungsbolzens von der Positionierungstasche und zum Positionieren des Positionierungsbolzens innerhalb der Positionierungstasche, und/oder einen Eingriffsabschnitt, der mit dem Spannabschnitt des Spann- und Lösewerkzeugs zum Einspannen des Positionierungsbolzens in die Positionierungstasche und dem U-förmigen Positionierungskragen in Eingriff bringbar ist.

Ein derartiger Positionierungsbolzen kann sowohl mit dem Spann- und Lösewerkzeug als auch mit den anderen Bestandteilen der Spannvorrichtung einfach in Wechselwirkung treten und so vorteilhafterweise sowohl für den Spann- als auch für den Lösevorgang genutzt werden.

Die Erfindung betrifft ferner ein Spann- und Lösewerkzeug für ein Positionier- und Spannsystem nach einem der Ansprüche 1 bis 11. Das Spann- und Lösewerkzeug kann dabei alle möglichen Merkmalskombinationen umfassen, die in den Ansprüchen 1 bis 11 genannt sind.

Die Erfindung richtet sich auch auf ein Verfahren zum Bearbeiten eines Werkstücks, wobei das Werkstück in ein Positionier- und Spannsystem nach einem der Ansprüche 1 bis 11 eingehängt und in diesem verspannt wird. Die Vorteile des Einhängens und Verspannens des Werkstücks gehen aus der obenstehenden Schilderung hervor.

In einem bevorzugten Ausführungsbeispiel ist denkbar, dass das Verfahren die Schritte umfasst:
Einführen des Werkstücks mit einer Mehrzahl von Positionierungsbolzen in eine Mehrzahl von an wenigstens einer Haltevorrichtung vorgesehenen Positionierungstaschen mit Positionierungsblechen;
Spannen des Werkstücks mit Positionierungsbolzen in den Positionierungstaschen mittels einer Mehrzahl von Spann- und Lösewerkzeugen;
Bearbeiten des Werkstücks (7) mittels wenigstens einer Bearbeitungsmaschine;
Lösen des Werkstücks mit Positionierungsbolzen von den Positionierungstaschen mittels der Spann- und Lösewerkzeuge; und
Entnehmen des Werkstücks aus den Positionierungstaschen.

Weitere Einzelheiten und Vorteile der Erfindung sollen nun anhand eines in den Figuren dargestellten Ausführungsbeispiels näher erläutert werde. Es zeigen:
- Figuren 1a - 1d:: Spann- und Lösewerkzeug in verschiedenen Ansichten;
- Figuren 2a, 2b:: Teildurchsichtige Darstellung von Spann- und Lösewerkzeug in verschiedenen Ansichten;
- Figuren 3a - 3d:: Teildurchsichtige Darstellung von Positionierungstasche mit Positionierungsblech in verschiedenen Ansichten;
- Figuren 4a - 4c:: Positionierungstasche mit Positionierungsblech und Positionierungsbolzen in verschiedenen Ansichten;
- Figuren 5a -5c:: Teildurchsichtige Darstellung von Positionierungstasche mit Positionierungsblech, Positionierungsbolzen und Spann- und Lösewerkzeug in verschiedenen Ansichten;
- Figur 6a:: Positionierungstaschen und Positionierungsbleche an einer Haltevorrichtung;
- Figur 6b:: Werkstück mit Positionierungsbolzen;
- Figur 6c:: Positionierungsbolzen;
- Figur 6d:: Werkstück mit Positionierungsbolzen an Haltevorrichtung mit Positionierungstaschen mit Positionierungsblechen; und
- Figuren 7a -7d:: Verschiedene Ansichten einer weiteren Haltevorrichtung mit Werkstück und drei Spannvorrichtungen.

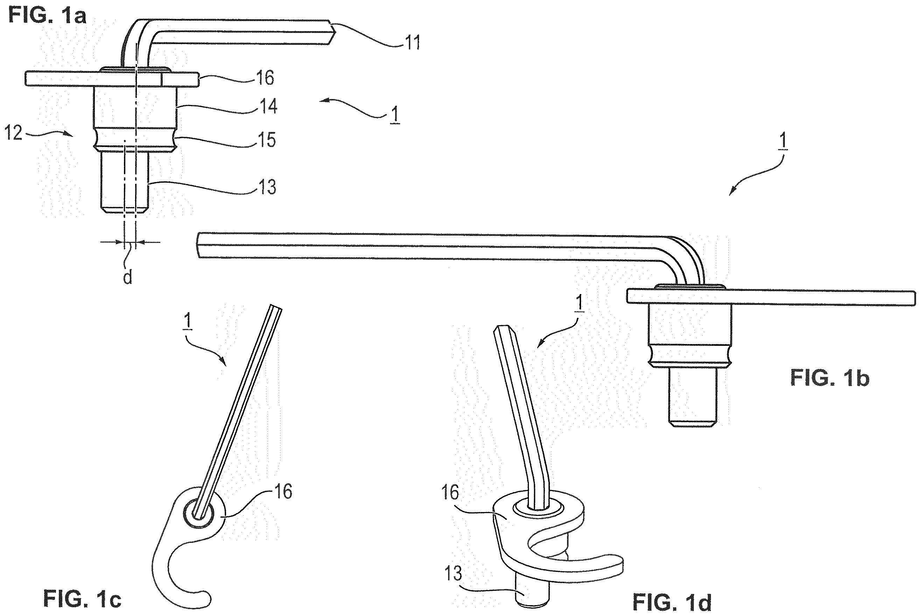

Figur 1a zeigt ein Spann- und Lösewerkzeug 1 in einer Seitenansicht, mit einem Hebel 11, einem Exzenterbolzen 12 und einer Ausziehklinke 16. Der Exzenterbolzen 12 weist dabei einen zylindrischen Lagerabschnitt 13 auf, der in einer im Folgenden gezeigten Aufnahme 31 lagerbar ist. Zum Lagerabschnitt 13 exzentrisch gelagert ist ein ebenfalls zylindrischer Spannabschnitt 14 bereitgestellt, der eine Rundnut 15 aufweist. Wie Figur 1a zu entnehmen ist, fällt die Eingriffsachse des Hebels 11 mit der Zylinderachse des Spannabschnitts 14 zusammen. Die Eingriffsachse des Hebels 11 und die Achse des Spannabschnitts 14 sind dabei um einen Betrag d von der Achse des Lagerabschnitts 13 beabstandet.

Figur 1b zeigt das Spann- und Lösewerkzeug 1 in einer anderen Seitenansicht. Figuren 1c und 1d zeigen das Spann- und Lösewerkzeug 1 in Drauf- bzw. Schrägansicht, wobei die Ausziehklinke 16 zu erkennen ist. Ist das Spann- und Lösewerkzeug 1 über den Lagerabschnitt 13 drehbar gelagert, so ist zu erkennen, dass bei Drehung des Spann- und Lösewerkzeugs 1 um die Achse des Lagerabschnitts 13 der Hebel 11 und die Ausziehklinke 16 Bewegungen in parallelen Ebenen beschreiben.

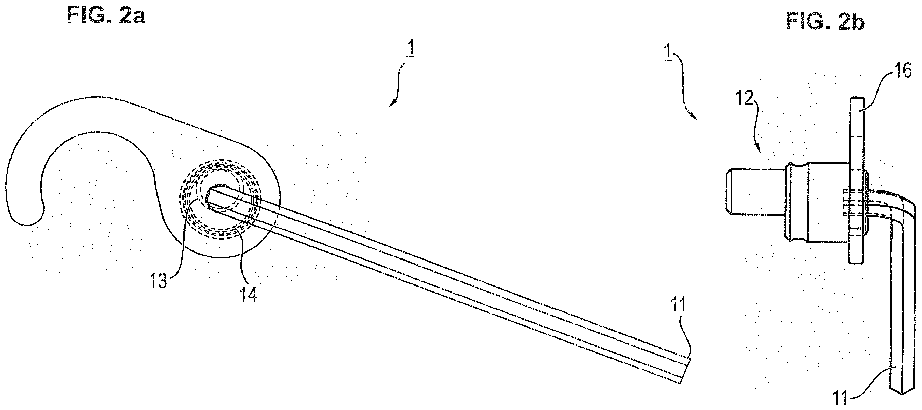

Figur 2a zeigt eine weitere Draufsicht des Spann- und Lösewerkzeugs 1, bei der zur Verdeutlichung der Exzentrizität von Lagerabschnitt 13 und Spannabschnitt 14 die Außenkanten der genannten Abschnitte gestrichelt dargestellt sind. Figur 2b zeigt, dass der Hebel 11 in einer Ausgestaltung als Inbusschlüssel fest mit dem Exzenterbolzen 12 verbunden ist und ein Drehmoment auf diesen übertragen kann.

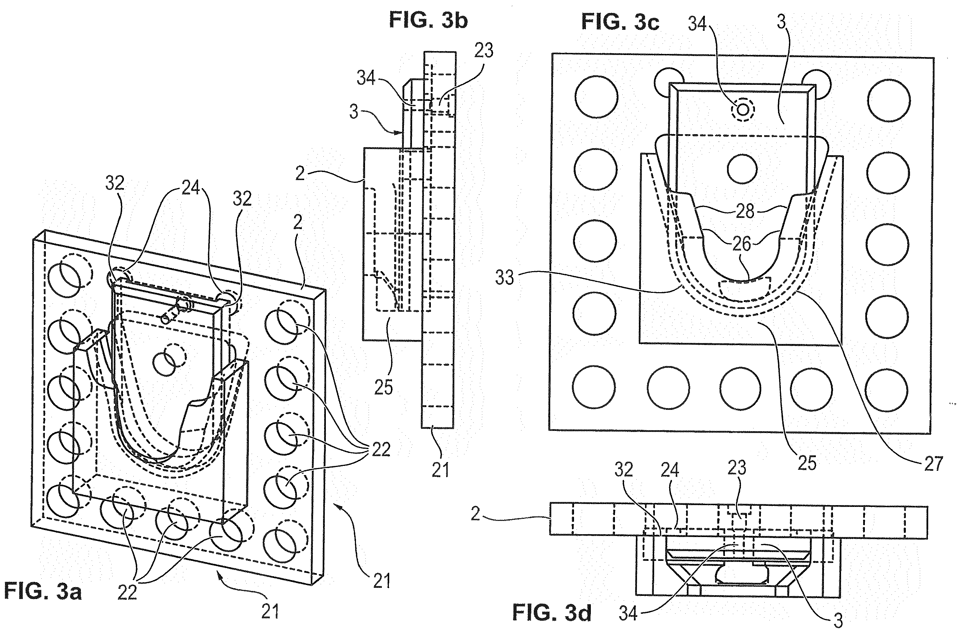

Figur 3a zeigt eine Positionierungstasche 2 mit einem darin sich befindlichen Positionierungsblech 3 in teildurchsichtiger Darstellung. Die Positionierungstasche 2 weist dabei einen umlaufenden Flanschabschnitt 21 mit einer darin vorgesehenen Mehrzahl von Durchführungen 22 auf. In dem gezeigten Ausführungsbeispiel sind dabei dreizehn Durchführungen 22 zum Verbinden der Positionierungstasche 2 mit einer im Folgenden gezeigten Haltevorrichtung 6 bereitgestellt. Ferner ist ein Verbindungselement 23 der Positionierungstasche 2 vorgesehen, mittels dem das Positionierungsblech 3 mit der Positionierungstasche 2 beispielsweise durch Verschrauben verbindbar ist. Erkennbar sind ferner Positionierungsausnehmungen 24, in die am Positionierungsblech 3 vorgesehene Positionierungszapfen 32 zum Positionieren des Positionierungsblechs 3 an der Positionierungstasche 2 einführbar sind.

Figur 3b zeigt ebenfalls Positionierungstasche 2 und Positionierungsblech 3 in Eingriff miteinander. Das Verbindungselement 23 der Positionierungstasche 2 ist dabei konzentrisch zur zylindrischen Durchführung 34 im Positionierungsblech 3 angeordnet. Durch beispielsweise eine Schraubverbindung können somit Positionierungsblech 3 und Positionierungstasche 2 relativ zueinander festgestellt werden.

Figur 3c zeigt Positionierungstasche 2 und Positionierungsblech 3 in einer Draufsicht, wobei die Positionierungstasche 2 teilweise transparent dargestellt ist. Im Bereich des Einschubfaches 25 der Positionierungstasche 2, in welche das Positionierungsblech 3 einführbar ist, ist dabei zum einen ein U-förmiger Positionierungskragen 26 erkennbar, in welchen ein im Folgenden beschriebener Positionierungsbolzen 4 einschiebbar ist. Weiterhin ist ein ebenfalls U-förmiger Positionierungsrand 27 im Bereich des Einschubfaches 25 vorgesehen, an dem das Positionierungsblech 3 mit einem unteren Bereich, der als ebenfalls U-förmige Positionierungskante 33 ausgebildet ist anliegt. Das Positionierungsblech 3 ist somit in einem unteren Bereich über seine U-förmige Positionierungskante 33 und in einem oberen Bereich über eine Verbindung mittels des Verbindungselements 23 an der Positionierungstasche 2 und einer Durchführung 34 relativ zur Positionierungstasche 2 feststellbar. In einem Bereich 28 des Positionierungskragens 26 ist zu erkennen, dass der Positionierungskragen 26 zur vereinfachten Aufnahme des Positionierungsbolzens 4 verbreitert ist. Beim Einführen eines Positionierungsbolzens 4, der zum Positionieren eines Werkstücks 7 mit diesem verbunden ist, wird es so vereinfacht, den Positionierungsbolzen 4 entsprechend in den Positionierungskragen 26 zu senken.

Figur 3d zeigt eine obere Seitenansicht von Positionierungstasche 2 und Positionierungsblech 3. Die Durchführung 34 des Positionierungsblechs 3 fluchtet dabei erkennbar mit dem Verbindungselement 23 der Positionierungstasche 2. Weiterhin ist angedeutet, dass die Positionierungszapfen 32 des Positionierungsblechs 3 in die Positionierungsausnehmungen 24 der Positionierungstasche 2 hineinragen und so das Positionierungsblech 3 in der Positionierungstasche 2 feststellen.

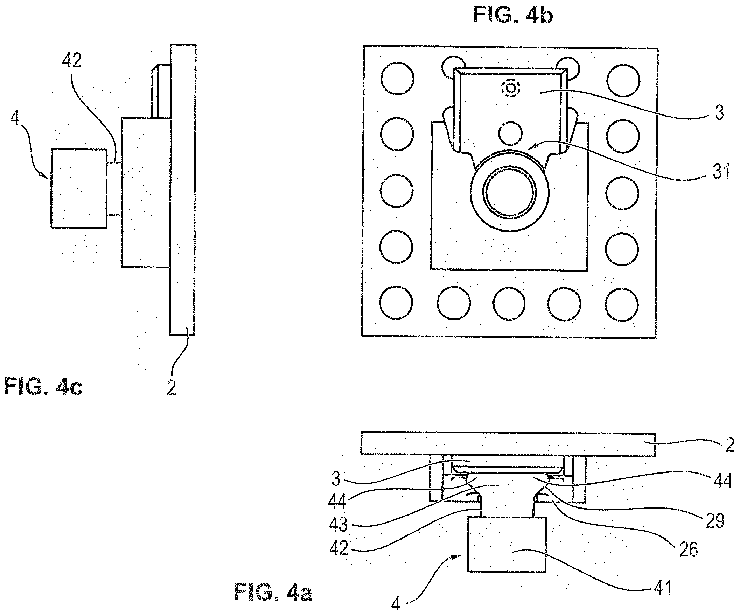

Figur 4a zeigt ebenfalls eine obere Seiteansicht von Positionierungstasche 2 und Positionierungsblech 3, allerdings mit dem zusätzlich eingefügten Positionierungsbolzen 4. Dieser weist an einem Ende einen Anbindungsabschnitt 41 zum Anbinden des Positionierungsbolzens 4 an ein im Folgenden beispielhaft gezeigtes Werkstück 7. Im mittleren Bereich des Positionierungsbolzens 4 erstreckt sich ein Rundnutabschnitt 42. In diesen Rundnutabschnitt 42 kann der Positionierungskragen 26 der Positionierungstasche 2 eingreifen und so den Positionierungsbolzen 4 zumindest teilweise feststellen. An dem dem Anbindungsabschnitt 41 gegenüberliegenden Ende des Positionierungsbolzens 4 befindet sich ein kegelstumpfförmiger Eingriffsabschnitt 43, der eine abgerundete Kante 44 aufweist. Wie in der Figur 4a zu erkennen, weist hierbei der Positionierungskragen 26 eine Schräge 29 auf, über die die Positionierungstasche 2 mit dem Eingriffsabschnitt 43 des Positionierungsbolzens 4 in Eingriff bringbar ist. Durch die schräge Ausführung der beiden Kontaktteile Positionierungskragen 26 und Eingriffsabschnitt 43 wird eine Verkeilung von Positionierungsbolzen 4 und Positionierungstasche 2 ermöglicht.

Im gezeigten Ausführungsbeispiel weist die Schräge 29 einen Schrägungswinkel von ca. 45° auf, wodurch sich eine 50%ige Kräfteaufteilung auf den Positionierungskragen 26 ergibt. Durch einen veränderten Schrägungswinkel, der beispielsweise zw. 40° und 50° oder auch zw. 20° und 70° liegen können die Spannkräfte in dem Positionierungskragen 26 in Abhängigkeit von der Gewichtskraft des zu positionierenden Werkstücks 7 und der Ablauf des Positionierungsvorgangs des Positionierungsbolzens 4 verändert werden.

Figur 4b zeigt die Positionierungstasche 2, das Positionierungsblech 3 und einen Positionierungsbolzen 4 in einer solchen verkeilten Position.

In einer seitlichen Ansicht der in Figuren 4a und 4b gezeigten Teile ist in Figur 4c zu erkennen, dass der Rundnutabschnitt 42 des Positionierungsbolzens 4 aus der Struktur der Positionierungstasche 2 hinaustritt. Wie in den folgenden Figuren gezeigt wird, kann in diesem Bereich die Ausziehklinke 16 des Spann- und Lösewerkzeugs 1 in Eingriff mit dem Positionierungsbolzen 4 gebracht werden.

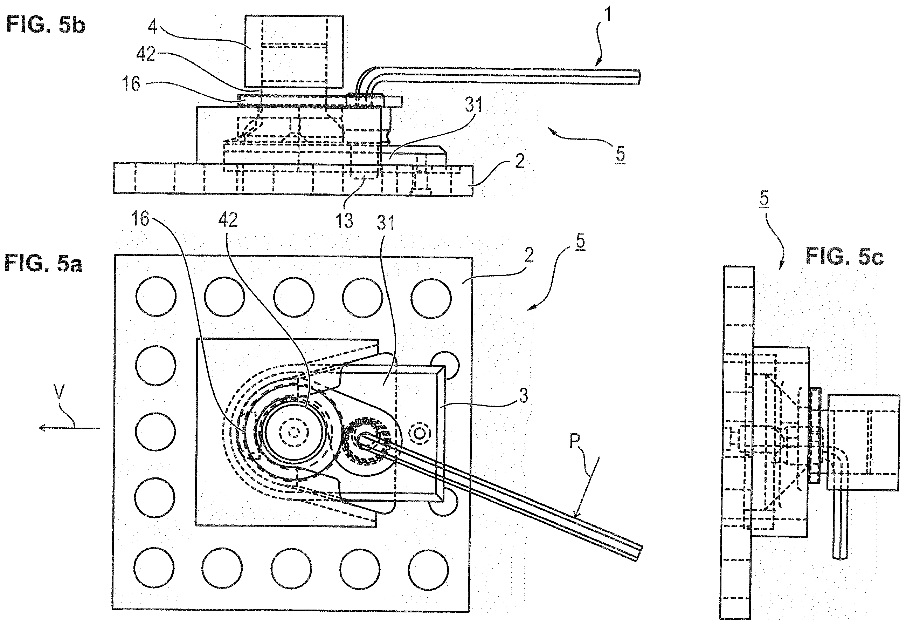

Figur 5a zeigt nun die gesamte Spannvorrichtung 5, in der das Spann- und Lösewerkzeug 1 in Eingriff mit Positionierungstasche 2, Positionierungsblech 3 und Positionierungsbolzen 4 ist. Hierbei ist das Spann- und Lösewerkzeug 1 zum einen über seinen Lagerabschnitt 13 in der Aufnahme 31 des Positionierungsblechs 3 gelagert. Zum anderen umschließt die Ausziehklinke 16 den Rundnutabschnitt 42 des Positionierungsbolzens 4. Durch Einbringen einer Kraft in Pfeilrichtung P kann somit, bedingt durch die Exzentrizität von Lagerabschnitt 13 und Spannabschnitt 14, der Positionierungsbolzen 4 in Richtung des Pfeils V nach vertikal unten gedrückt werden.

Figuren 5b und 5c, die Seitenansichten der Spannvorrichtung 5 darstellen, verdeutlichen den Eingriff der Ausziehklinke 16 in den Rundnutabschnitt 42 des Positionierungsbolzens 4.

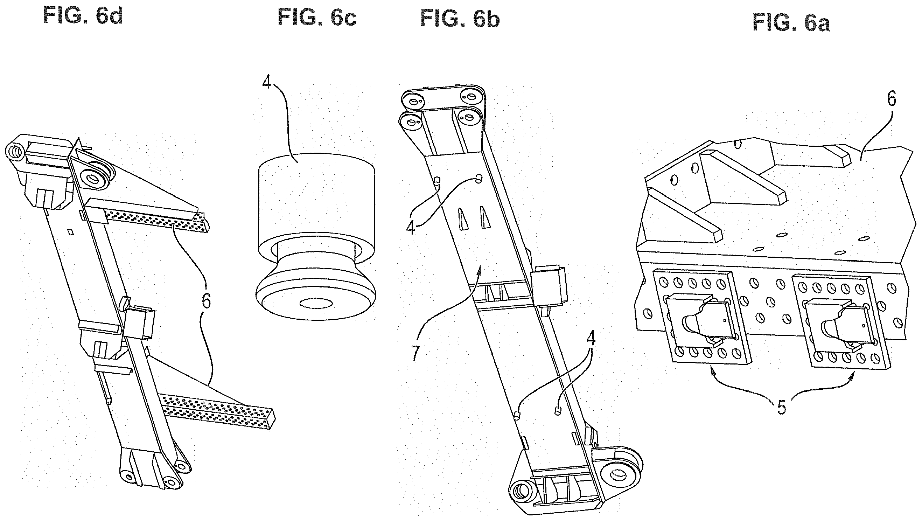

Figur 6a zeigt eine Haltevorrichtung 6, an der zwei Spannvorrichtungen 5 angebracht sind. Nicht gezeigt sind hierbei Positionierungsbolzen 4 und Spann- und Lösewerkzeuge 1. Figur 6b zeigt ein Werkstück 7, das vier Positionierungsbolzen 4 aufweist, welche fest mit diesem verbunden sind. In Figur 6c ist ein Positionierungsbolzen 4 vergrößert dargestellt. In Figur 6d sind zwei Haltevorrichtungen 6 gezeigt, an denen je zwei Spannvorrichtungen 5 befestigt sind. Nicht gezeigt sind dabei die Spann- und Lösewerkzeuge 1 der Spannvorrichtungen 5. Wie in Figur 6d zu erkennen ist, kann das Werkstück 7 mittels der Positionierungsbolzen 4 in einer Bewegung von oben nach unten in die Positionierungstaschen 2 eingehängt werden. Unter Zuhilfenahme eines Spann- und Lösewerkzeuges 1 kann dann in der zuvor geschilderten Art jeder der vier Positionierungsbolzen 4 in die Positionierungstaschen 2 gespannt werden.

Zum Lösen des Werkstücks 7 bzw. der mit ihm verbundenen Positionierungsbolzen 4 kann entsprechend das Spann- und Lösewerkzeug 1 entgegengesetzt der in Figur 5a gezeigten Pfeilrichtung P bewegt werden und somit eine gegebenenfalls bestehende Verkeilung zwischen Positionierungsbolzen 4 und Positionierungstasche 2 gelöst werden.

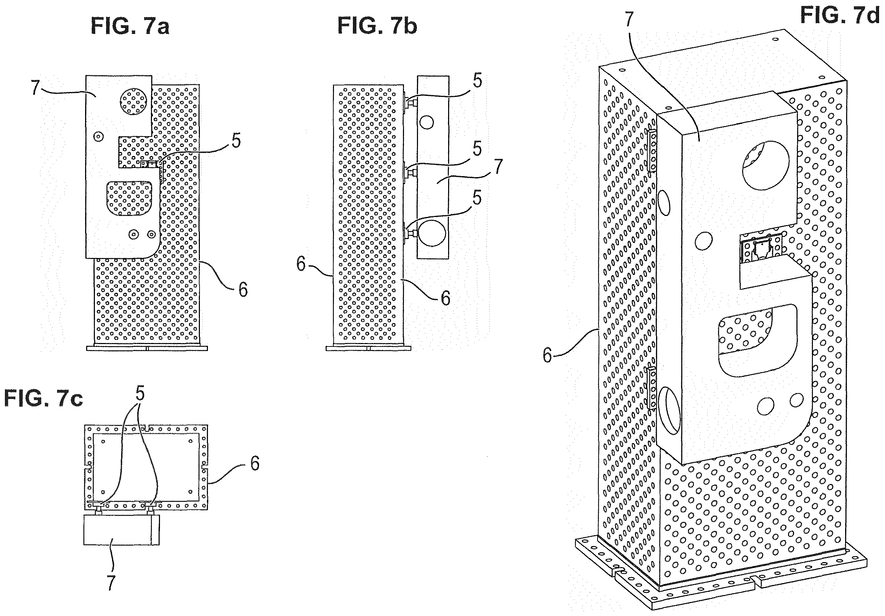

Figuren 7a bis 7d zeigen eine weitere Haltevorrichtung 6, an der drei Spannvorrichtungen 5 angebracht sind. Dabei sind am Werkstück 7 entsprechend drei Positionierungsbolzen 4 vorgesehen, welche fest mit diesem verbunden sind.

## Patentansprüche

1. Positionier- und Spannsystem zum Positionieren und Verspannen eines Werkstücks (7) an einer Bearbeitungsmaschine, wobei
ein Positionierungsbolzen (4) mit dem Werkstück (7) verbunden ist,
eine Positionierungstasche (2) mit einer Haltevorrichtung (6) verbunden ist, das Werkstück (7) mit dem Positionierungsbolzen (4) in der Positionierungstasche (2) positioniert und mittels eines Spann- und Lösewerkzeugs (1) mit der Positionierungstasche (2) lösbar verspannt ist, und
die Positionierungstasche (2) ein Einschubfach (25) zur Aufnahme des Positionierungsbolzens (4) aufweist,
**dadurch gekennzeichnet, dass**
das Einschubfach (25) einen U-förmigen Positionierungskragen (26) zum Einschieben und Positionieren des Positionierungsbolzens (4) umfasst, wobei
der U-förmige Positionierungskragen (26) zu seinen Enden hin verbreitert ist.

2. Positionier- und Spannsystem nach Anspruch 1, wobei
das Spann- und Lösewerkzeug (1) zum Spannen und Lösen lösbar verspannbarer Werkstücke je wenigstens einen Hebel (11), einen Exzenterbolzen (12) und eine Ausziehklinke (16) umfasst, und/oder
der Exzenterbolzen (12) einen zylindrischen Lagerabschnitt (13) zum drehbaren Lagern des Spann- und Lösewerkzeugs (1) in einer zylindrischen Aufnahme (31) und einen zum Lagerabschnitt (13) exzentrischen, zylindrischen Spannabschnitt (14) umfasst, und/oder dass der Hebel (11) und die Ausziehklinke (16) am Spannabschnitt (14) vorgesehen sind.

3. Positionier- und Spannsystem nach Anspruch 2, **dadurch gekennzeichnet, dass** der Hebel (11) des Spann- und Lösewerkzeugs (1) als Inbusschlüssel ausgebildet ist.

4. Positionier- und Spannsystem nach Anspruch 2 oder 3, **dadurch gekennzeichnet, dass** der Spannabschnitt (14) des Spann- und Lösewerkzeugs (1) eine Nut (15) umfasst.

5. Positionier- und Spannsystem nach Anspruch 4, **dadurch gekennzeichnet, dass** die Nut (15) des Spann- und Lösewerkzeugs (1) als Rundnut (15) ausgebildet ist.

6. Positionier- und Spannsystem nach einem der vorhergehenden Ansprüche, **dadurch gekennzeichnet, dass** eine Spannvorrichtung (5) des Positionier- und Spannsystems das Spann- und Lösewerkzeug (1), die Positionierungstasche (2), den Positionierungsbolzen (4) und ein Positionierungsblech (3) umfasst.

7. Positionier- und Spannsystem nach Anspruch 1, **dadurch gekennzeichnet, dass**
das Einschubfach (25) einen U-förmigen Positionierungsrand (27) zum Einschieben und Positionieren des Positionierungsblechs (3) umfasst.

8. Positionier- und Spannsystem nach einem der Ansprüche 1, 6 oder 7, **dadurch gekennzeichnet, dass**
die Positionierungstasche (2) einen Flanschabschnitt (21) mit einer Mehrzahl von Durchführungen (22) zum Verbinden der Positionierungstasche (2) mit einer Haltevorrichtung (6), und/oder
ein Verbindungselement (23) zum Verbinden des Positionierungsblechs (3) mit der Positionierungstasche (2), und/oder
eine Positionierungsausnehmung (24) zum Positionieren des Positionierungsblechs (3) umfasst.

9. Positionier- und Spannsystem nach einem der Ansprüche 1, 6, 7 oder 8, **dadurch gekennzeichnet, dass**
das Positionierungsblech (3) eine Durchführung (34) zum Verbinden des Positionierungsblechs (3) mit der Positionierungstasche (2), und/oder
eine zylindrische Aufnahme (31) zum Lagern des zylindrischen Lagerabschnitts (13) des Positionierungsbolzens (4) des Spann- und Lösewerkzeugs (1), und/oder
eine U-förmige Positionierungskante (33) zum Positionieren des Positionierungsblechs (3) im Einschubfach (25) der Positionierungstasche (2), und/oder
einen Positionierungszapfen (32) zum Positionieren des Positionierungsblechs (3) in der Positionierungstasche (2) umfasst.

10. Positionier- und Spannsystem nach einem der Ansprüche 1 oder 8 bis 9, **dadurch gekennzeichnet, dass**
der Positionierungsbolzen (4) einen Anbindungsabschnitt (41) zum Anbinden des Positionierungsbolzens (4) an ein Werkstück (7), und/oder
einen Rundnutabschnitt (42) zum Aufnehmen der Ausziehklinke (16) des Spann- und Lösewerkzeugs (1) zum Lösen des Positionierungsbolzens (4) von der Positionierungstasche (2) und zum Positionieren des Positionierungsbolzens (4) innerhalb der Positionierungstasche (2), und/oder
einen Eingriffsabschnitt (43), der mit dem Spannabschnitt (14) des Spann- und Lösewerkzeugs (1) zum Einspannen des Positionierungsbolzens (4) in die Positionierungstasche (2) und dem U-förmigen Positionierungskragen (26) in Eingriff bringbar ist.

11. Verfahren zum Bearbeiten eines Werkstücks (7), **dadurch gekennzeichnet, dass** das Werkstück (7) in einem Positionier- und Spannsystem nach einem der Ansprüche 1 bis 10 eingehängt und in diesem verspannt wird.

12. Verfahren nach Anspruch 11, umfassend die Schritte:
Einführen des Werkstücks (7) mit einer Mehrzahl von Positionierungsbolzen (4) in eine Mehrzahl von an wenigstens einer Haltevorrichtung (6) vorgesehenen Positionierungstaschen (2) mit Positionierungsblechen (3);
Spannen des Werkstücks (7) mit Positionierungsbolzen (4) in den Positionierungstaschen (2) mittels einer Mehrzahl von Spann- und Lösewerkzeugen (1);
Bearbeiten des Werkstücks (7) mittels einer Bearbeitungsmaschine;
Lösen des Werkstücks (7) mit Positionierungsbolzen (4) von den Positionierungstaschen (2) mittels der Spann- und Lösewerkzeuge (1); und
Entnehmen des Werkstücks (7) aus den Positionierungstaschen (2).

## Claims

1. Positioning and clamping system for positioning and clamping a workpiece (7) on a processing machine, wherein
a positioning bolt (4) is connected to the workpiece (7),
a positioning pocket (2) is connected to a holding device (6),
the workpiece (7) with the positioning bolt (4) is positioned in the positioning pocket (2) and is clamped detachably by means of a clamping and release tool (1) to the positioning pocket (2), and
the positioning pocket (2) has a slide compartment (25) for receiving the positioning bolt (4),
**characterised in that**
the slide compartment (25) comprises a U-shaped positioning collar (26) for inserting and positioning the positioning bolt (4), wherein
the U-shaped positioning collar (26) is widened towards its ends.

2. Positioning and clamping system according to claim 1, wherein
the clamping and release tool (1) for clamping and releasing detachably clampable workpieces comprises at least a lever (11), an eccentric bolt (12) and a removal handle (16), and/or
the eccentric bolt (12) comprises a cylindrical support section (13) for rotatably supporting the clamping and release tool (1) in a cylindrical receptacle (31) and a cylindrical clamping section (14) eccentric to the support section (13), and/or the lever (11) and the removal handle (16) are provided on the clamping section (14).

3. Positioning and clamping system according to claim 2, **characterised in that** the lever (11) of the clamping and removal tool (1) is formed as an Allen key.

4. Positioning and clamping system according to claim 2 or 3, **characterised in that** the clamping section (14) of the clamping and release tool (1) comprises a groove (15).

5. Positioning and clamping system according to claim 4, **characterised in that** the groove (15) of the clamping and release tool (1) is formed as a circular groove (15).

6. Positioning and clamping system according to any one of the preceding claims, **characterised in that** a clamping device (5) of the positioning and clamping system comprises the clamping and release tool (1), the positioning pocket (2), the positioning bolt (4) and a positioning plate (3).

7. Positioning and clamping system according to claim 1, **characterised in that** the slide compartment (25) comprises a U-shaped positioning lip (27) for insertion and positioning of the positioning plate (3).

8. Positioning and clamping system according to any one of claims 1, 6 or 7, **characterised in that**
the positioning pocket (2) comprises a flange section (21) with a plurality of leadthroughs (22) for connecting the positioning pocket (2) to a holding device (6), and/or
a connection element (23) for connecting the positioning plate (3) to the positioning pocket (2), and/or
a positioning receptacle (24) for positioning the positioning plate (3).

9. Positioning and clamping system according to any one of claims 1, 6, 7 or 8, **characterised in that**
the positioning plate (3) comprises a leadthrough (34) for connecting the positioning plate (3) to the positioning pocket (2), and/or
a cylindrical receptacle (31) for supporting the cylindrical support section (13) of the positioning bolt (4) of the clamping and release tool (1), and/or
a U-shaped positioning edge (33) for positioning the positioning plate (3) in the slide compartment (25) of the positioning pocket (2), and/or
a positioning pin (32) for positioning the positioning plate (3) in the positioning pocket (2).

10. Positioning and clamping system according to any one of claims 1 or 8 to 9, **characterised in that**
the positioning bolt (4) comprises a connection section (41) for connecting the positioning bolt (4) to a workpiece (7), and/or
a circular groove section (42) for receiving the removal handle (16) of the clamping and release tool (1) for releasing the positioning bolt (4) from the positioning pocket (2) and for positioning the positioning bolt (4) inside the positioning pocket (2), and/or
an engagement section (43), which can be brought into engagement with the clamping section (14) of the clamping and release tool (1) for fixing the positioning bolt (4) in the positioning pocket (2) and with the U-shaped positioning collar (26).

11. Method for processing a workpiece (7), **characterised in that** the workpiece (7) is mounted in a positioning and clamping system according to any one of claims 1 to 10 and is clamped in this.

12. Method according to claim 11, comprising the steps:
introduction of the workpiece (7) with a plurality of positioning bolts (4) into a plurality of positioning pockets (2) with positioning plates (3) provided on at least one holding device (6);
clamping of the workpiece (7) with positioning bolts (4) in the positioning pockets (2) by means of a plurality of clamping and release tools (1);
processing of the workpiece (7) by means of a processing machine;
release of the workpiece (7) with positioning bolts (4) from the positioning pockets (2) by means of the clamping and release tools (1); and
removal of the workpiece (7) from the positioning pockets (2).

## Revendications

1. Système de positionnement et de serrage servant à positionner et serrer une pièce (7) au niveau d'une machine d'usinage, dans lequel un boulon de positionnement (4) est relié à la pièce (7),
une poche de positionnement (2) est reliée à un dispositif de maintien (6),
la pièce (7) est positionnée avec le boulon de positionnement (4) dans la poche de positionnement (2) et est assemblée par serrage de manière amovible à la poche de positionnement (2) au moyen d'un outil de serrage et de desserrage (1), et
la poche de positionnement (2) présente un compartiment d'insertion par glissement (25) servant à recevoir le boulon de positionnement (4),
**caractérisé en ce que**
le compartiment d'insertion par glissement (25) comprend un rebord de positionnement (26) en forme de U servant à insérer par glissement et positionner le boulon de positionnement (4), dans lequel
le rebord de positionnement (26) en forme de U est élargi vers ses extrémités.

2. Système de positionnement et de serrage selon la revendication 1, dans lequel
l'outil de serrage et de desserrage (1) servant à serrer et à desserrer des pièces pouvant être assemblées par serrage de manière amovible comprend respectivement au moins un levier (11), un boulon à excentrique (12) et un loquet de retrait (16), et/ou
le boulon à excentrique (12) comprend une section de palier (13) cylindrique servant à supporter de manière rotative l'outil de serrage et de desserrage (1) dans un logement cylindrique (31) et une section de serrage (14) cylindrique excentrique par rapport à la section de palier (13), et/ou que le levier (11) et le loquet de retrait (16) sont prévus au niveau de la section de serrage (14).

3. Système de positionnement et de serrage selon la revendication 2, **caractérisé en ce que** le levier (11) de l'outil de serrage et de desserrage (1) est réalisé sous la forme d'une clé Allen.

4. Système de positionnement et de serrage selon la revendication 2 ou 3, **caractérisé en ce que** la section de serrage (14) de l'outil de serrage et de desserrage (1) comprend une rainure (15).

5. Système de positionnement et de serrage selon la revendication 4, **caractérisé en ce que** la rainure (15) de l'outil de serrage et de desserrage (1) est réalisée sous la forme d'une rainure ronde (15).

6. Système de positionnement et de serrage selon l'une quelconque des revendications précédentes, **caractérisé en ce qu'**un dispositif de serrage (5) du système de positionnement et de serrage comprend l'outil de serrage et de desserrage (1), la poche de positionnement (2), le boulon de positionnement (4) et une tôle de positionnement (3).

7. Système de positionnement et de serrage selon la revendication 1, **caractérisé en ce**
**que** le compartiment d'insertion par glissement (25) comprend un bord de positionnement (27) en forme de U servant à insérer par glissement et à positionner la tôle de positionnement (3).

8. Système de positionnement et de serrage selon l'une quelconque des revendications 1, 6 ou 7,
**caractérisé en ce que**
la poche de positionnement (2) comprend une section de bride (21) pourvue d'une multitude de passages (22) servant à relier la poche de positionnement (2) à un dispositif de maintien (6), et/ou
un élément de liaison (23) servant à relier la tôle de positionnement (3) à la poche de positionnement (2), et/ou
un évidement de positionnement (24) servant à positionner la tôle de positionnement (3).

9. Système de positionnement et de serrage selon l'une quelconque des revendications 1, 6, 7 ou 8,
**caractérisé en ce que**
la tôle de positionnement (3) comprend un passage (34) servant à relier la tôle de positionnement (3) à la poche de positionnement (2), et/ou un logement (31) cylindrique servant à supporter la section de palier (13) cylindrique du boulon de positionnement (4) de l'outil de serrage et de desserrage (1), et/ou
une arête de positionnement (33) en forme de U servant à positionner la tôle de positionnement (3) dans le compartiment d'insertion par glissement (25) de la poche de positionnement (2), et/ou
un tourillon de positionnement (32) servant à positionner la tôle de positionnement (3) dans la poche de positionnement (2).

10. Système de positionnement et de serrage selon l'une quelconque des revendications 1 ou 8 à 9,
**caractérisé en ce que**
le boulon de positionnement (4) comprend une section de rattachement (41) servant à rattacher le boulon de positionnement (4) à une pièce (7), et/ou une section de rainure ronde (42) servant à recevoir le loquet de retrait (16) de l'outil de serrage et de desserrage (1) servant à desserrer le boulon de positionnement (4) de la poche de positionnement (2) et servant à positionner le boulon de positionnement (4) à l'intérieur de la poche de positionnement (2), et/ou
une section de prise (43), qui peut être amenée en prise avec la section de serrage (14) de l'outil de serrage et de desserrage (1) servant à enserrer le boulon de positionnement (4) dans la poche de positionnement (2) et avec le rebord de positionnement (26) en forme de U.

11. Procédé servant à usiner une pièce (7), **caractérisé en ce que** la pièce (7) est suspendue dans un système de positionnement et de serrage selon l'une quelconque des revendications 1 à 10 et est assemblée par serrage dans celui-ci.

12. Procédé selon la revendication 11,
comprenant les étapes :
d'introduction de la pièce (7) avec une multitude de boulons de positionnement (4) dans une multitude de poches de positionnement (2), prévues au niveau d'au moins un dispositif de maintien (6), pourvues de tôles de positionnement (3) ;
de serrage de la pièce (7) avec des boulons de positionnement (4) dans les poches de positionnement (2) au moyen d'une multitude d'outils de serrage et de desserrage (1) ;
d'usinage de la pièce (7) au moyen d'une machine d'usinage ;
de desserrage de la pièce (7) avec des boulons de positionnement (4) des poches de positionnement (2) au moyen des outils de serrage et de desserrage (1) ; et
d'enlèvement de la pièce (7) hors des poches de positionnement (2).
